# EUROPÄISCHE PATENTSCHRIFT

(11) **EP 0 960 788 B1**
(45) Veröffentlichungstag und Bekanntmachung des Hinweises auf die Patenterteilung: **29.05.2002**
(21) Anmeldenummer: 99109953.2
(22) Anmeldetag: 20.05.1999
(51) Int. Cl.: B60R 21/22

(54) **Seiten-Luftsack**
Side airbag
Coussin gonflable latéral

(30) Priorität: 26.05.1998 DE 19823492
(43) Veröffentlichungstag der Anmeldung: 01.12.1999
(73) Patentinhaber: TAKATA (EUROPE) VEHICLE SAFETY TECHNOLOGY GmbH, 89081 Ulm (DE)
(72) Erfinder: Einsiedel, Heinrich, 89073 Ulm (DE)
(74) Vertreter: Baumgärtel, Gunnar, Dr.

(56) Entgegenhaltungen:
- DE-A- 19 647 679
- DE-U- 29 705 489
- GB-A- 2 297 950
- GB-A- 2 324 068

## Beschreibung

Die Erfindung betrifft einen aufblasbaren Seiten-Luftsack mit kanalförmigen Formkammern, der eine Befestigungsseite aufweist, die zur Befestigung des Luftsacks entlang eines im wesentlichen kurvenförmigen Befestigungsabschnittes längs eines Dachholmes eines Kraftfahrzeuges vorgesehen ist, sowie eine freie Seite, die durch Aufblasen des am Befestigungsabschnitt befestigten Luftsacks entlang einer im wesentlichen in vertikaler Richtung nach unten verlaufenden Hauptabwicklungsrichtung ausfaltbar ist und die im derart aufgeblasenen Zustand des Luftsacks an dessen Unterseite sowie der Befestigungsseite im wesentlichen gegenüberliegend vorgesehen ist. Ein solcher Seiten-Luftsack ist aus der gattungsbildenden EP-A- 808 257 bekannt.

Ein derartiger Seiten-Luftsack, im folgenden lediglich als "Luftsack" bezeichnet, dient zum Schutz von Insassen des Kraftfahrzeuges bei einem Unfall. Hierfür wird der Luftsack gegebenenfalls aufgeblasen, so daß er sich - ausgehend vom Befestigungsabschnitt am Dachholm - insbesondere in der Hauptabwicklungsrichtung entfaltet und somit ein Schutzpolster zwischen den betreffenden Insassen und der Seitenwand des Kraftfahrzeuges bildet. Dabei dienen die Formkammern zum einen zur Bildung von Schutzpolstern, zum andern zur Stabilisierung der Ausrichtung des aufgeblasenen Luftsacks sowie zur Verkürzung des Luftsacks bei seinem Aufblasen, so daß der Luftsack gespannt wird.

Es ist ein Nachteil der bekannten Luftsäcke, daß ihre mit dem Aufblasen einhergehende Verkürzung oftmals Verwindungen oder Faltenbildung an der Luftsackoberfläche bewirkt, und zwar vor allem im Bereich der Befestigungsseite.

Es ist eine Aufgabe der Erfindung, einen Luftsack der eingangs genannten Art zu schaffen, der zu einer dem Umriß eines Dachholmes angepaßten Form aufgeblasen werden kann, so daß der aufgeblasene Luftsack die gewünschte Form, Spannung und Ausrichtung einnimmt, hierbei jedoch keine unerwünschten Verwindungen oder Falten an der Luftsackoberfläche auftreten. Die Erfindung soll außerdem ein geeignetes Verfahren zur Schaffung eines solchen Luftsacks aufzeigen.

Diese Aufgabe wird erfindungsgemäß durch einen solchen Luftsack der eingangs genannten Art gelöst, dessen Zuschnitt - d. h. dessen Form im auseinandergefalteten oder ausgebreiteten, nicht aufgeblasenen Zustand - entlang der Befestigungsseite eine im wesentlichen geradlinige Umrandung aufweist, die im wesentlichen dieselbe Länge besitzt wie die Gesamtlänge des kurvenförmigen Befestigungsabschnittes, und dessen Zuschnitt entlang der freien Seite eine im wesentlichen kurvenförmige Umrandung aufweist.

Beim erfindungsgemäßen Luftsack ist die Befestigungsseite im Zuschnitt - im Gegensatz zu der gewünschten Kurvenform der Befestigungsseite im aufgeblasenen Zustand - mit einer im wesentlichen geradlinigen Umrandung ausgebildet und einer Länge, die der über den gesamten Kurvenverlauf des Befestigungsabschnittes integrierten Länge entspricht. Die Umrandung der Befestigungsseite ist im Sinne dieser Erfindung auch dann noch als im wesentlichen geradlinig anzusehen, falls sie einige lokale Unstetigkeiten aufweist, die beispielsweise aus der Anpassung der Befestigungsseite an den Verlauf eines Gasrohres resultieren. Die Umrandung der freien Seite ist im Zuschnitt erfindungsgemäß kurvenförmig ausgebildet dergestalt, daß ihr Verlauf weitestgehend dem kurvenförmigen Verlauf des Befestigungsabschnittes sowie dem Verlauf der Umrandung der gewünschten Betriebsform des Luftsacks entspricht.

Der erfindungsgemäße Luftsack kann in vorteilhafter Weise derart aufgeblasen werden, daß seine untere, freie Seite durch Verkürzung gespannt wird, wobei keine Verwindungen oder Falten an der Luftsackoberfläche entstehen. Dies ist insbesondere auf folgende Eigenschaften des erfindungsgemäßen Luftsacks zurückzuführen:

Da im Zuschnitt die Umrandung der Befestigungsseite im wesentlichen geradlinig und die Umrandung der freien Seite im wesentlichen kurvenförmig ausgebildet ist, besitzt letztere eine größere Gesamtlänge als erstere, so daß die freie Seite im innerhalb des Kraftfahrzeuges befestigten, jedoch nicht aufgeblasenen Zustand des Luftsacks eine gewisse Überlänge aufweist. Dagegen entspricht die Gesamtlänge der Befestigungsseite im Zuschnitt der Gesamtlänge des Befestigungsabschnitts.
Beim Aufblasen des Luftsacks bewirken die entsprechend angeordneten Formkammern eine Verkürzung des Luftsacks entlang der freien Seite, wobei im Bereich der freien Seite die stärkste Verkürzung auftritt, während die Verkürzung zur Befestigungsseite hin ein immer geringeres Ausmaß annimmt. Entlang der Umrandung der Befestigungsseite, an der die Gesamtlängen von Luftsack und Befestigungsabschnitt übereinstimmen, erfolgt keine Verkürzung. Somit ermöglicht die Erfindung einen im wesentlichen kontinuierlichen Ausgleich der für das Spannen des Luftsacks erforderlichen Verkürzung, wodurch nachteilige Verwindungen oder Falten wirksam vermieden werden.

Im Rahmen der Erfindung wurde erkannt, daß dagegen bei einer üblichen Ausbildung der Umrandung des Zuschnitts als zentrische Streckung des Umrisses der gewünschten Betriebsform eine Verkürzung entlang der unteren, freien Seite auch eine entsprechende Verkürzung desselben Ausmaßes an der Befestigungsseite erforderlich macht. Da die Befestigungsseite jedoch entlang des kurvenförmigen Dachholmes geführt ist, führt die bisher übliche Zuschnittsform zu unerwünschten Verwindungen und Falten am aufgeblasenen Luftsack.

Es ist ein weiterer Vorteil des erfindungsgemäßen Luftsacks, daß er auf besonders einfache Weise hergestellt werden kann. Beispielsweise kann der Zuschnitt aus zwei Seiten bestehen, die entlang der beim Aufblasen des Luftsacks besonders beanspruchten Befestigungsseite nicht eigens miteinander verbunden werden müssen, sondern aufgrund der geradlinigen Ausbildung der Umrandung der Befestigungsseite aus einem einzigen Materialstück gewählt sein können, das entlang der Befestigungsseite umgefaltet ist.

In einer bevorzugten Ausführungsform des Luftsacks weist dieser in seiner Betriebsform an der freien Seite eine im wesentlichen geradlinig und in horizontale Richtung verlaufende Umrandung auf.

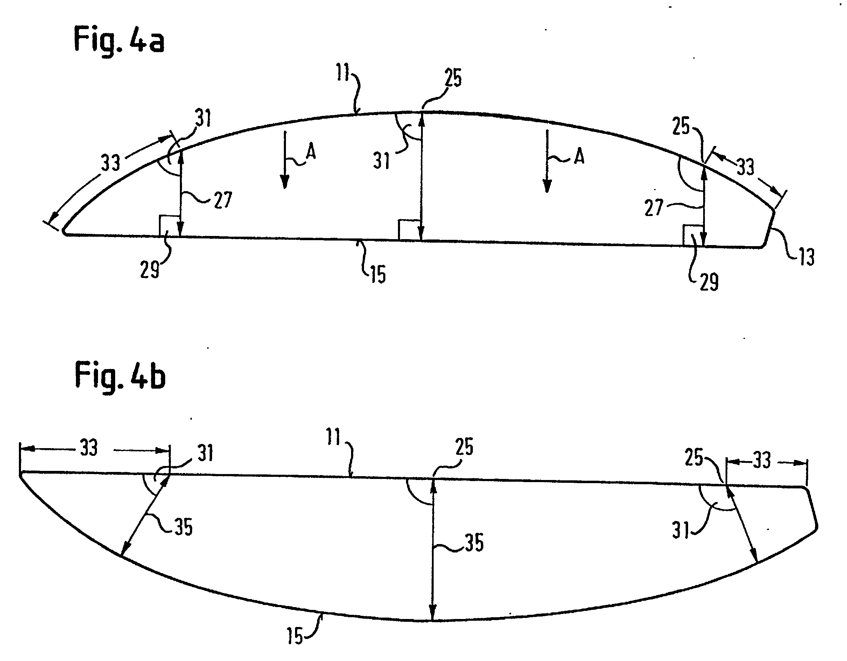

Daß der Luftsack im aufgeblasenen Zustand die gewünschte Betriebsform aufweist, kann auf besonders wirkungsvolle Weise erreicht werden, wenn im Zuschnitt die Zuschnitts-Höhe, d. h. der Abstand von der Umrandung der Befestigungsseite zur Umrandung der freien Seite, für mehrere Abschnitte entlang der Befestigungsseite jeweils zumindest so groß gewählt ist wie die gewünschte Luftsack-Höhe, also wie die entsprechende Erstreckung der gewünschten Betriebsform (vgl. Fig. 4a und 4b).

Die Ausgestaltung des erfindungsgemäßen Luftsacks mit den kanalförmigen Formkammern dient - wie erwähnt - unter anderem zur Erzielung der gewünschten Verkürzung des Luftsacks bei seinem Aufblasen. Dabei kann durch entsprechende Anordnung der Formkammern und Ausrichtung ihrer jeweiligen Kanalform eine besonders zielgerichtete Verkürzung des Luftsacks erreicht werden. Grundsätzlich erhält man die stärkste Verkürzung des Luftsacks entlang der freien Seite, wenn die Kanalformen der Formkammern im Zuschnitt senkrecht zu der Umrandung der freien Seite bzw. zu der Tangente an dieser Umrandung ausgebildet sind. Die Verschmälerung einer Formkammer bei deren Aufblasen erfolgt nämlich grundsätzlich am stärksten entlang einer Ebene, die senkrecht steht zu der Kanalform der Formkammer.

Es ist jedoch auch möglich, die Formkammern in einer anderen Ausrichtung als in der erläuterten Weise vorzusehen. Bevorzugt verläuft die Kanalform der Formkammern an der freien Seite senkrecht zu deren Umrandung und im Bereich der Befestigungsseite in einem solchen Winkel zu deren Umrandung, welcher der Einströmrichtung des für das Aufblasen des Luftsack vorgesehenen Gases oder der Stütz- und Polsterungsfunktion des Luftsacks angepaßt ist, beispielsweise in einem Winkel von 30° bis 60° zu der Umrandung der Befestigungsseite.

Die Kanalformen der Formkammern sind also nicht unbedingt geradlinig ausgebildet, sondern können insbesondere im Bereich der Befestigungsseite auch gemäß einer beliebigen Kurvenfunktion gebogen ausgebildet sein.

Die Überlänge der freien Seite des Zuschnitts kann mit hoher Genauigkeit auf die für die entsprechende Umrandung der Betriebsform des Luftsacks gewünschte und für das Spannen des Luftsacks erforderliche Länge verkürzt werden, wenn die Breiten bzw. Durchmesser der kanalförmigen Formkammern im Bereich der freien Seite entsprechend gewählt sind.

Die vorstehende Erläuterung des auf eine möglichst verwindungs- und faltenfreie Betriebsform des Luftsacks gerichteten Zuschnitts betrifft dessen grundsätzliche Ausgestaltung. Der erfindungsgemäße Luftsack kann jedoch auf verschiedenartige Weise unterschiedlichen Anwendungsfällen, insbesondere unsymmetrischen oder inhomogenen Anordnungen der Formkammern, ausgehend von diesem Grundaufbau leicht angepaßt werden.

Beispielsweise kann der Zuschnitt, wenn die Kanalform einer Formkammer in der Betriebsform des Luftsacks nicht parallel zur Hauptabwicklungsrichtung verläuft und diese Formkammer sich beim Aufblasen dementsprechend auch mit einer gewissen Komponente entlang der Hauptabwicklungsrichtung verschmälert, durch eine entsprechende Zugabe an der freien Seite, und zwar im Bereich dieser Formkammer, verlängert sein.

Weiterhin kann es von Vorteil sein, wenn die Formkammern bezüglich ihrer in der Betriebsform gewünschten Lage im Zuschnitt um einen solchen Versetzungsabstand versetzt sind, welcher der durch Aufblasen des Luftsacks bedingten lokalen Verkürzung des Luftsacks entspricht. Dadurch kann die Geometrie des Zuschnitts einer bezüglich seiner gesamten Oberfläche ungleichmäßigen Verkürzung angepaßt werden.

Die Aufgabe der Erfindung wird andererseits durch ein solches Verfahren zur Herstellung eines Zuschnitts eines erfindungsgemäßen, vorstehend beschriebenen Luftsacks gelöst, bei welchem der Zuschnitt entlang der als Oberseite des Luftsacks vorgesehenen Befestigungsseite mit einer im wesentlichen geradlinigen Umrandung ausgebildet wird, die im wesentlichen dieselbe Länge besitzt wie die Gesamtlänge des kurvenförmigen Befestigungsabschnittes, und bei welchem der Zuschnitt entlang der als Unterseite des Luftsacks vorgesehenen freien Seite mit einer im wesentlichen kurvenförmigen Umrandung ausgebildet wird, die ausgehend von der geradlinigen Umrandung der Befestigungsseite dem Verlauf des Befestigungsabschnittes und dem Verlauf der Umrandung der freien Seite der gewünschten Betriebsform des Luftsacks entspricht.

Die Merkmale und Vorteile dieses Verfahrens ergeben sich in entsprechender Weise aus der Beschreibung des erfindungsgemäßen Luftsacks. Insbesondere ist es möglich, daß die Zuschnitts-Höhe abschnittsweise jeweils mindestens so groß gewählt wird wie die gewünschte entsprechende Luftsack-Höhe.

Weitere Ausführungsformen der Erfindung sind in den Unteransprüchen beschrieben. Die Erfindung wird nachfolgend anhand von Ausführungsbeispielen im Zusammenhang mit den Figuren beschrieben; in diesen zeigen jeweils in schematischer Seitenansicht
- Fig. 1: einen Zuschnitt eines erfindungsgemäßen Luftsacks,
- Fig. 2: die Befestigung des Luftsacks gemäß Fig. 1 innerhalb eines Kraftfahrzeuges,
- Fig. 3: einen Zuschnitt eines bekannten Luftsacks,
- Fig. 4a und 4b: den Luftsack gemäß Fig. 1 in der gewünschten Betriebsform bzw. im Zuschnitt, und
- Fig. 5 und 6: einen Zuschnitt eines erfindungsgemäßen Luftsacks mit geradlinig bzw. gebogen ausgebildeten Formkammern.

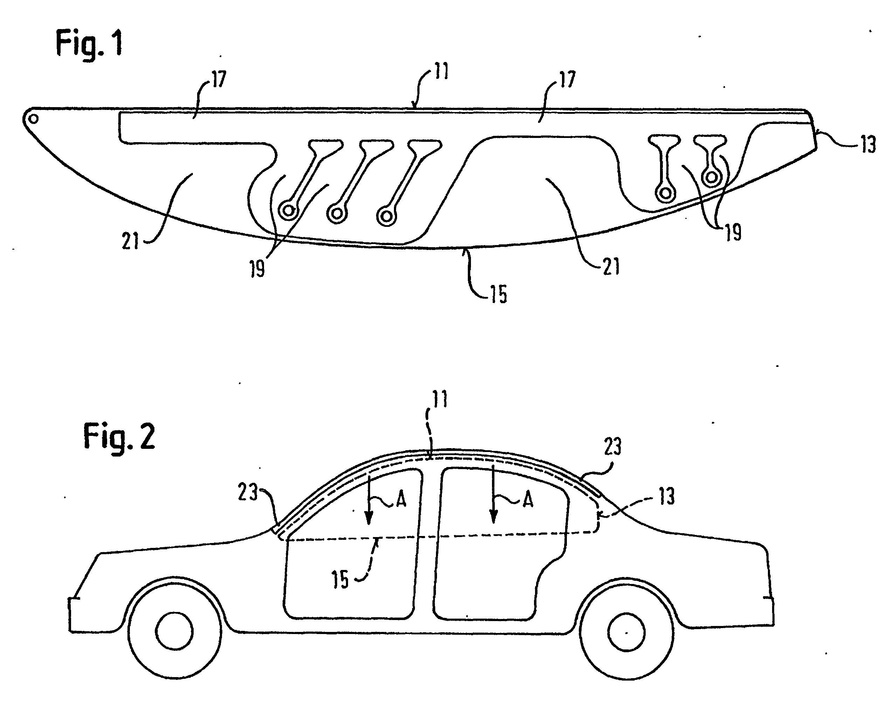

Fig. 1 zeigt den Zuschnitt eines erfindungsgemäßen Luftsacks in einer Seitenansicht. Dieser Luftsack besitzt an seiner in der Darstellung gemäß Fig. 1 oberen Seite eine Befestigungsseite 11 mit geradliniger Umrandung und an seiner rechten Seite eine vergleichsweise kurze Querseite 13. Unterhalb der Befestigungsseite 11 ist der Luftsack mit einer freien Seite 15 dergestalt ausgebildet, daß deren Umrandung als bezüglich der Befestigungseite 11 konkav gekrümmte Kurve an das linke Ende der Befestigungsseite 11 und an das untere Ende der Querseite 13 anschließt. In der Seitenansicht gemäß Fig. 1 erscheint der Zuschnitt somit kreissegmentähnlich. Die Ausbildung des Luftsacks mit der Querseite 13 kann - in Abhängigkeit von dem vorgesehenen Kraftfahrzeugtyp - auch entfallen, so daß der in Fig. 1 gezeigte Luftsack mit zwei spitzen Winkeln zwischen den Umrandungen der Befestigungsseite 11 und der freien Seite 15 ausgestaltet sein kann.

Der dargestellte Luftsack besitzt einen aufblasbaren Längsformbereich 17, der sich entlang fast der gesamten Befestigungsseite 11 erstreckt, sowie mehrere mit dem Längsformbereich 17 verbundene und sich bis zur freien Seite 15 erstreckende Formkammern 19, deren Längsvernähungen - im Gegensatz zu der Darstellung gemäß Fig. 1 - beispielsweise zum Zwecke einer noch stärkeren Verkürzung der freien Seite 15 auch noch bis zu deren Umrandung geführt sein können. Der gezeigte Luftsack besitzt außerdem mehrere nicht aufblasbare Spannbereiche 21 zur Übertragung von Spannkräften zwischen verschiedenen Gruppen von Formkammern 19.

Der in Fig. 1 dargestellte Luftsack dient hauptsächlich zum seitlichen Schutz von Insassen eines Kraftfahrzeuges, insbesondere von Kopf und Oberkörper der Insassen mittels der aufgeblasenen Formkammern 19. Hierfür ist der Luftsack innerhalb eines Kraftfahrzeuges zunächst im zusammengefaltenen Zustand befestigt.

Fig. 2 zeigt ein Kraftfahrzeug in einer schematischen Seitenansicht. Der in Fig. 1 dargestellte Luftsack ist im zusammengefaltenen Zustand entlang eines Befestigungsabschnitts 23 am Kraftfahrzeug befestigt, welcher sich in der Darstellung gemäß Fig. 2 im wesentlichen von der A-Säule bis zur C-Säule entlang des Dachholms des Kraftfahrzeuges erstreckt. Bei einem Unfall wird der Luftsack, insbesondere der Längsformbereich 17 und die Formkammern 19, beispielsweise über ein Gasrohr aufgeblasen, so daß er sich im wesentlichen entlang einer in der Darstellung gemäß Fig. 2 vertikal nach unten weisenden Hauptabwicklungsrichtung A entfaltet. Die somit vom Luftsack eingenommene Betriebsform ist in Fig. 2 gestrichelt eingezeichnet.

Aus Fig. 2 geht somit hervor, daß der erfindungsgemäße Luftsack mit seiner im Zuschnitt geradlinig umrandeten Befestigungsseite 11 entlang des entsprechend dem Verlauf des Dachholmes kurvenförmigen Befestigungsabschnittes 23 am Kraftfahrzeug befestigt ist. Die im Zuschnitt kurvenförmig umrandete freie Seite 15 besitzt in der Betriebsform des Luftsacks hingegen einen im wesentlichen geradlinigen Verlauf.

Die Länge der im Zuschnitt geradlinigen Befestigungsseite 11 entspricht im wesentlichen der Gesamtlänge des Befestigungsabschnitts 23. Die Gesamtlänge der im Zuschnitt kurvenförmig umrandeten freien Seite 15 ist im Gegensatz hierzu um eine Überlänge - je nach Fahrzeugtyp - von beispielsweise 200 - 300 mm länger als die Länge der freien Seite in der in Fig. 2 gezeigten Betriebsform des Luftsacks. Falls der Luftsack mit seiner im Zuschnitt geradlinig umrandeten Befestigungsseite 11 entlang des kurvenförmigen Befestigungsabschnitts 23 am Kraftfahrzeug befestigt wird, wirft die kurvenförmig umrandete freie Seite 15 - falls der Luftsack entfaltet, jedoch nicht aufgeblasen ist - sich deshalb zu Falten.

Sobald der montierte Luftsack aufgeblasen wird, wird diese Überlänge der Umrandung der freien Seite 15 jedoch durch die Verkürzung des Luftsacks aufgebraucht, so daß die Unterkante des aufgeblasenen Luftsacks geradlinig verläuft und fest gespannt ist, wie in Fig. 2 gezeigt. Da der Luftsack umgekehrt entlang der Befestigungsseite 11 aufgrund seiner erfindungsgemäßen Ausbildung dieselbe Gesamtlänge besitzt wie der Befestigungsabstand 23, weist der aufgeblasene Luftsack entlang der Hauptabwicklungsrichtung A keine unerwünschten Verwindungen oder Falten auf.

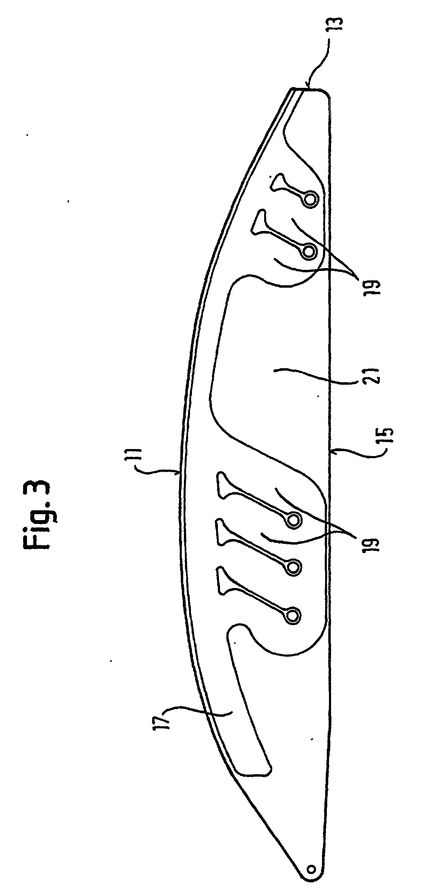

Fig. 3 zeigt in schematischer Seitenansicht einen Zuschnitt eines bekannten Luftsacks, wobei dieselben Bezugszeichen wie in Fig. 1 gleiche oder entsprechende Teile bezeichnen. Die Umrandung des Zuschnitts dieses bekannten Luftsacks geht im wesentlichen als zentrische Streckung des Umrisses der in Fig. 2 gestrichelt gezeigten gewünschten Betriebsform des Luftsacks hervor, d. h. der Zuschnitt des bekannten Luftsacks besitzt im wesentlichen denselben Umriß wie die gewünschte Betriebsform, ist jedoch hinsichtlich seiner in Fig. 3 dargestellten Erstreckungsrichtungen größer ausgebildet als diese.

Beim Aufblasen des in Fig. 3 dargestellten Zuschnitts kann dieser zwar die in Fig. 2 gestrichelt gezeigte gewünschte Betriebsform einnehmen. Da jedoch die Umrandung der Befestigungsseite 11 im Zuschnitt länger ist als der Befestigungsabschnitt 23 am Kraftfahrzeug, kommt es insbesondere im Bereich der Befestigungsseite 11 zu unerwünschten Falten und Verwindungen an den Formkammern 19 und entlang der Spannbereiche 21.

Eine erfindungsgemäße Möglichkeit zur Ermittlung derjenigen Zuschnitts-Höhe zwischen der Befestigungsseite 11 und der freien Seite 15, welche beim Aufblasen des Luftsacks zu einer gewünschten entsprechenden Luftsack-Höhe führt und welche dabei dem Verlauf des Befestigungsabschnittes 23 sowie dem Verlauf der Umrandung der freien Seite 15 der gewünschten Betriebsform des Luftsacks entspricht, wird nachfolgend anhand der Fig. 4a und 4b erläutert.

Fig. 4a zeigt die Umrandungen der Befestigungsseite 11, Querseite 13 und freien Seite 15 des Luftsacks gemäß Fig. 1 in dessen gewünschter Betriebsform. Die Darstellung des Luftsacks in Fig. 4a entspricht also der gestrichelten Darstellung dieses Luftsacks im aufgeblasenen, innerhalb des Kraftfahrzeuges montierten Zustand gemäß Fig. 2. In Fig. 4a ist die dementsprechend in vertikaler Richtung nach unten verlaufende Hauptabwicklungsrichtung A eingezeichnet.

Für mehrere Bemessungstellen 25 entlang der Umrandung der Befestigungsseite 11 ist die Luftsack-Höhe 27 dieser Umrandung von der Umrandung der freien Seite 15 dargestellt, und zwar jeweils in einer Richtung parallel zur Hauptabwicklungsrichtung A. Die Luftsack-Höhe 27 steht somit jeweils in einem rechten Winkel 29 zur Umrandung der freien Seite 15 und in einem bestimmten Abstandswinkel 31 zur Umrandung der Befestigungsseite 11. In Fig. 4a ist für zwei Bemessungsstellen 25 außerdem deren Distanz 33 entlang der Umrandung der Befestigungseite 11 bis zum jeweiligen Ende der Befestigungsseite 11 dargestellt.

Fig. 4b zeigt den Zuschnitt des Luftsacks gemäß Fig. 4a und entspricht somit der Darstellung des Luftsacks gemäß Fig. 1. Dieser Zuschnitt läßt sich ausgehend von der in Fig. 4a dargestellten gewünschten Betriebsform auf folgende Weise konstruieren:

Für die Umrandung der Befestigungsseite 11 des Zuschnitts wird ein geradliniger Verlauf vorgesehen, und zwar mit derselben Länge wie die Gesamtlänge der Umrandung der Befestigungsseite 11 in der gewünschten Betriebsform des Luftsacks und somit wie die entsprechende Gesamtlänge des Befestigungsabschnitts 23 entlang des Dachholms des in Fig. 2 gezeigten Kraftfahrzeuges.

Entlang dieser geradlinigen Umrandung des Zuschnitts wird die Lage der Bemessungsstellen 25 bestimmt. Diese befinden sich entlang der Umrandung der Befestigungsseite 11 des Zuschnitts in derselben Distanz 33 vom jeweiligen Ende der Befestigungsseite 11 wie in der in Fig. 4a gezeigten gewünschten Betriebsform.

An den Bemessungsstellen 25 wird nun jeweils eine Zuschnitts-Höhe 35 angetragen, die genauso lang ist und in demselben Abstandswinkel 31 zur Umrandung der Befestigungsseite 11 steht wie die entsprechende Luftsack-Höhe 27. Die Zuschnitts-Höhe 35 und die Luftsack-Höhe 27 entsprechen sich also dahingehend, daß sie dieselbe Länge aufweisen und beide von entsprechender Bemessungsstelle 25 entlang der Umrandung der Befestigungsseite 11 mit demselben Abstandswinkel 31 hierzu bemessen sind.

Aus den derart ermittelten, an der geradlinigen Befestigungsseite 11 des Zuschnitts angetragenenen Zuschnitts-Höhen 35 ergibt sich somit die Umrandung der freien Seite 15 im Zuschnitt. Diese Umrandung der freien Seite 15 besitzen einen kurvenförmigen Verlauf, und sie begrenzt die Zuschnitts-Höhen 35 im wesentlichen jeweils in rechtem Winkel.

Der im Zusammenhang mit den Fig. 4a und 4b erläuterte grundsätzliche Aufbau des Zuschnitts des erfindungsgemäßen Luftsacks setzt für dessen in Fig. 4a gezeigte Betriebsform einen im wesentlichen parallelen Verlauf der Formkammern des Luftsacks zur Hauptabwicklungsrichtung A voraus. Dementsprechend sollte die Kanalform jeder Formkammer 19 in dem in Fig. 4b gezeigten Zuschnitt im wesentlichen parallel zu der Zuschnitts-Höhe 35 und somit senkrecht zur Umrandung der freien Seite 15 verlaufen.

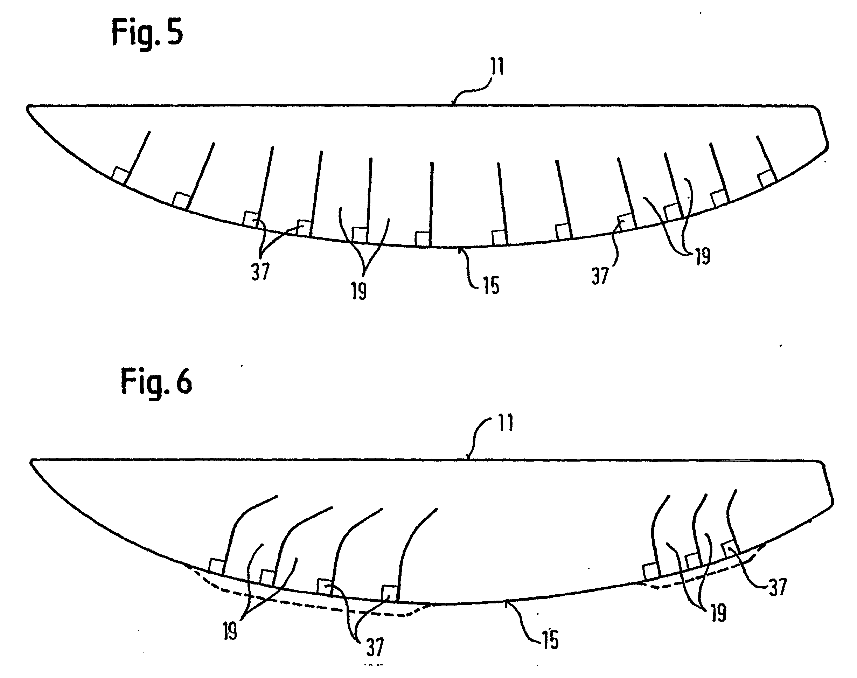

Ein derartiger bezüglich der Verkürzung des Luftsacks idealer Verlauf der Formkammern 19 im Zuschnitt ist in Fig. 5 gezeigt, die der Darstellung des Zuschnitts gemäß Fig. 4b entspricht. Die Kanalform der schematisch eingezeichneten Formkammern 19 steht jeweils in rechtem Winkel 37 zur Umrandung der freien Seite 15.

Von einem solchen Idealaufbau des Luftsacks mit gleichmäßig verteilten Formkammern, deren Kanalform jeweils geradlinig senkrecht zur Umrandung der freien Seite 15 verläuft, kann im Rahmen der Erfindung ohne weiteres abgewichen werden, wenn dadurch beispielsweise ein besseres Aufblasverhalten des Luftsacks oder eine günstigere Anpassung der Anordnung der Formkammern an die entlang der Kraftfahrzeugseite zu schützenden Bereiche erfolgen soll.

In Fig. 6 ist hierzu beispielhaft ein gebogener Verlauf von einzelnen Formkammern 19 in einem Zuschnitt dargestellt, der dem in Fig. 1 dargestellten Zuschnitt entspricht. Die Kanalform dieser Formkammern 19 steht ebenfalls jeweils in einem rechten Winkel 37 zur Umrandung der freien Seite 15. Zur Befestigungsseite 11 hin ist die jeweilige Kanalform jedoch gegenüber einem geradlinigen Verlauf gebogen.

Da eine Formkammer 19 sich beim Aufblasen im wesentlichen senkrecht zu ihrer Kanalform verschmälert, bewirkt der gebogene Verlauf der in Fig. 6 dargestellten Formkammern 19 nicht nur eine Verkürzung der freien Seite 15, sondern auch eine Verschmälerung des Luftsacks in der in der Darstellung gemäß Fig. 6 vertikalen Richtung. Dieser Verschmälerung kann - gegenüber dem idealisierten Aufbau des Zuschnitts gemäß Fig. 5 - dadurch Rechnung getragen werden, daß an der freien Seite 15 des Zuschnitts im Bereich der gebogen ausgebildeten Formkammern 19 jeweils eine Zugabe im Zuschnitt vorgesehen ist, wie in Fig. 6 gestrichelt gezeigt.

## Patentansprüche

1. Aufblasbarer Seiten-Luftsack mit kanalförmigen Formkammern (19), der eine Befestigungsseite (11) aufweist, die zur Befestigung des Luftsacks entlang eines im wesentlichen kurvenförmigen Befestigungsabschnittes (23) längs eines Dachholmes eines Kraftfahrzeuges vorgesehen ist, sowie
eine freie Seite (15), die durch Aufblasen des am Befestigungsabschnitt (23) befestigten Luftsacks entlang einer im wesentlichen in vertikaler Richtung nach unten verlaufenden Hauptabwicklungsrichtung (A) ausfaltbar ist und die im derart aufgeblasenen Zustand des Luftsacks an dessen Unterseite sowie der Befestigungsseite (11) im wesentlichen gegenüberliegend vorgesehen ist,
**dadurch gekennzeichnet,**
**daß** der Zuschnitt des Luftsacks entlang der Befestigungsseite (11) eine im wesentlichen geradlinige Umrandung aufweist, die im wesentlichen dieselbe Länge besitzt wie die Gesamtlänge des kurvenförmigen Befestigungsabschnittes (23), und
**daß** der Zuschnitt entlang der freien Seite (15) eine im wesentlichen kurvenförmige Umrandung aufweist.

2. Luftsack nach Anspruch 1,
**dadurch gekennzeichnet,**
**daß** die Form des Luftsacks im aufgeblasenen und am Befestigungsabschnitt (23) befestigten Zustand (Betriebsform) an der freien Seite (15) eine im wesentlichen geradlinig und in horizontaler Richtung verlaufende Umrandung aufweist.

3. Luftsack nach einem der vorhergehenden Ansprüche,
**dadurch gekennzeichnet,**
**daß** im Zuschnitt der Abstand (35) zwischen der geradlinigen Umrandung der Befestigungsseite (11) und der Umrandung der freien Seite (15), d. h. die Zuschnitts-Höhe, abschnittsweise jeweils zumindest so groß gewählt ist wie die entsprechende Erstreckung (27) der gewünschten Betriebsform des Luftsacks, d. h. die Luftsack-Höhe.

4. Luftsack nach einem der vorhergehenden Ansprüche,
**dadurch gekennzeichnet,**
**daß** die Kanalform einer Formkammer (19) im Zuschnitt an der freien Seite (15) im wesentlichen senkrecht zur Umrandung der freien Seite (15) bzw. deren Tangente ausgebildet ist.

5. Luftsack nach einem der vorhergehenden Ansprüche,
**dadurch gekennzeichnet,**
**daß** die Kanalform einer Formkammer (19) im Zuschnitt im wesentlichen geradlinig oder gebogen ausgebildet ist.

6. Luftsack nach einem der vorhergehenden Ansprüche,
**dadurch gekennzeichnet,**
**daß** die Breiten bzw. Durchmesser der Kanalformen der Formkammern (19) zumindest im Bereich der freien Seite (15) dergestalt gewählt sind, daß die Gesamtlänge der Umrandung der freien Seite (15) des Zuschnitts durch eine beim Aufblasen des Luftsacks erfolgende Verschmälerung der Formkammern (19) zu der gewünschten entsprechenden Gesamtlänge der Betriebsform verkürzt ist.

7. Luftsack nach einem der vorhergehenden Ansprüche,
**dadurch gekennzeichnet,**
**daß** zum Ausgleich eines Verlaufs der Kanalform einer Formkammer (19) in einem von Null verschiedenen Winkel zur Hauptabwicklungsrichtung die Zuschnitts-Höhe (35) im Bereich dieser Formkammer (19) durch eine Zugabe im Zuschnitt gegenüber der Luftsack-Höhe (27) verlängert ist.

8. Luftsack nach einem der vorhergehenden Ansprüche,
**dadurch gekennzeichnet,**
**daß** im Zuschnitt die Formkammern (19) jeweils um einen solchen Versetzungsabstand gegenüber ihrer im aufgeblasenen Zustand des Luftsacks gewünschten Lage versetzt sind, der in Länge und Richtung der durch Aufblasen des Luftsacks bedingten Verkürzung des Luftsacks quer zum kanalförmigen Verlauf der Formkammern (19) entspricht.

9. Verfahren zur Herstellung eines Zuschnitts eines Seiten-Luftsacks gemäß einem der vorhergehenden Ansprüche,
**dadurch gekennzeichnet,**
**daß** der Zuschnitt entlang der Befestigungsseite (11) mit einer im wesentlichen geradlinigen Umrandung ausgebildet wird, die im wesentlichen dieselbe Länge besitzt wie die Gesamtlänge des kurvenförmigen Befestigungsabschnittes (23), und
**daß** der Zuschnitt entlang der freien Seite (15) mit einer im wesentlichen kurvenförmigen Umrandung ausgebildet wird, die ausgehend von der geradlinigen Umrandung der Befestigungsseite (11) dem Verlauf des Befestigungsabschnittes (23) und dem Verlauf der Umrandung der freien Seite (15) der gewünschten Betriebsform des Luftsacks entspricht.

10. Verfahren nach Anspruch 9,
**dadurch gekennzeichnet,**
**daß** bei der Ausbildung des Zuschnitts entlang der freien Seite (15) mit der im wesentlichen kurvenförmigen Umrandung die Zuschnitts-Höhe (35) für mehrere Abschnitte entlang der Befestigungsseite (11) zumindest so groß gewählt wird wie die gewünschte entsprechende Luftsack-Höhe (27).

## Claims

1. Inflatable side airbag having channel-shaped shaping chambers (19), the said airbag having a fastening side (11), which is provided in order to fasten the airbag along an essentially curved fastening section (23) along a roof strut of a motor vehicle, and a free side (15), which can be unfolded, by inflation of the airbag fastened to the fastening section (23), along a main unwinding direction (A) running downwards essentially in the vertical direction, and which, when the airbag is inflated in such a manner, is provided lying essentially opposite the lower side of the said airbag and opposite the fastening side (11), **characterized in that** the airbag blank has, along the fastening side (11), an essentially rectilinear border, which has essentially the same length as the overall length of the curved fastening section (23), and **in that** the blank has an essentially curved border along the free side (15) .

2. Airbag according to Claim 1, **characterized in that** the airbag shape, when inflated and fastened at the fastening section (23) (operational shape), has a border which runs essentially rectilinearly and in the horizontal direction on the free side (15).

3. Airbag according to one of the preceding claims, **characterized in that** in the blank the distance (35) between the rectilinear border of the fastening side (11) and the border of the free side (15), i.e. the height of the blank, is selected, in some sections in each case, to be at least the same size as the corresponding extent (27) of the desired operational shape of the airbag, i.e. the height of the airbag.

4. Airbag according to one of the preceding claims, **characterized in that** the channel shape of a shaping chamber (19) in the blank is designed on the free side (15) such that it is essentially perpendicular with respect to the border of the free side (15) or the tangent thereof.

5. Airbag according to one of the preceding claims, **characterized in that** the channel shape of a shaping chamber (19) in the blank is designed such that it is essentially rectilinear or curved.

6. Airbag according to one of the preceding claims, **characterized in that** the widths or diameters of the channel shapes of the shaping channels (19) are selected, at least in the region of the free side (15), in such a manner that the overall length of the border of the free side (15) of the blank is shortened by the shaping chambers (19) tapering, which takes place when the airbag is inflated, to the desired, corresponding overall length of the operational shape.

7. Airbag according to one of the preceding claims, **characterized in that** in order to compensate for a profile of the channel shape of a shaping channel (19) at an angle differing from zero with respect to the main unwinding direction, the height (35) of the blank is extended with respect to the height (27) of the airbag in the region of this shaping chamber (19) by means of an additional piece in the blank.

8. Airbag according to one of the preceding claims, **characterized in that** in the blank the shaping chambers (19) are in each case offset with respect to their position desired when the airbag is inflated, by an offset spacing which corresponds in length and direction to the shortening of the airbag, which is caused by the airbag being inflated, transversely with respect to the channel-shaped profile of the shaping chambers (19).

9. Method for producing a side airbag blank according to one of the preceding claims, **characterized in that** the blank is designed, along the fastening side (11), with an essentially rectilinear border which has essentially the same length as the overall length of the curved fastening section (23), and **in that** the blank is designed along the free side (15) with an essentially curved border which, starting from the rectilinear border of the fastening side (11), corresponds to the profile of the fastening section (23) and the profile of the border of the free side (15) of the desired operational shape of the airbag.

10. Method according to Claim 9, **characterized in that**, when the blank is formed along the free side (15) with the essentially curved border, the height (35) of the blank is selected, in a number of sections along the fastening side (11), to be at least the same size as the desired, corresponding height (27) of the airbag.

## Revendications

1. Coussin d'air latéral gonflable comportant des chambres de formage en forme de canaux (19), qui comprend un côté de fixation (11) prévu pour la fixation du coussin d'air le long d'un tronçon de fixation (23) sensiblement en forme incurvée le long d'un longeron de toit d'un véhicule automobile, ainsi que
un côté libre (15) qui est dépliable par gonflage du coussin d'air fixé sur le tronçon de fixation (23) le long d'une direction de déroulement principale (A) s'étendant sensiblement en direction verticale vers le bas et qui, dans l'état ainsi gonflé du coussin d'air, est prévu sur sa face inférieure ainsi que sensiblement en vis-à-vis du côté de fixation (11),
**caractérisé en ce que**
le flan du coussin d'air comprend le long du côté de fixation (11) un entourage sensiblement rectiligne qui possède sensiblement la même longueur que la longueur totale du tronçon de fixation (23) en forme incurvée, et
**en ce que** le flan comprend le long du côté libre (15) un entourage sensiblement en forme incurvée.

2. Coussin d'air selon la revendication 1, **caractérisé en ce que** la forme du coussin d'air dans l'état gonflé et fixé sur le tronçon de fixation (23) (forme en fonctionnement) comprend sur le côté libre (15) un entourage sensiblement rectiligne et s'étendant en direction horizontale.

3. Coussin d'air selon l'une des revendications précédentes, **caractérisé en ce que** dans le flan la distance (35) entre l'entourage rectiligne du côté de fixation (11) et l'entourage du côté libre (15), c'est-à-dire la hauteur du flan, est choisie localement avec une taille respective au moins égale à l'extension correspondante (27) de la forme désirée en fonctionnement du coussin d'air, c'est-à-dire à la hauteur du coussin d'air.

4. Coussin d'air selon l'une quelconque des revendications précédentes,
**caractérisé en ce que** la forme en canal d'une chambre de formage (19) est réalisée, dans le flan sur le côté libre (15), sensiblement perpendiculairement à l'entourage du côté libre (15) ou à sa tangente.

5. Coussin d'air selon l'une quelconque des revendications précédentes, **caractérisé en ce que** la forme en canal d'une chambre de formage (19) est réalisée, dans le flan, sensiblement en forme rectiligne ou recourbée.

6. Coussin d'air selon l'une quelconque des revendications précédentes, **caractérisé en ce que** les largeurs ou les diamètres des formes en canaux des chambres de formage (19) sont choisi(e)s, au moins dans la zone du côté libre (15), de telle sorte que la longueur totale de l'entourage du côté libre (15) du flan est raccourcie par un rétrécissement des chambres de formage (19), effectué lors du gonflage du coussin d'air, à la longueur totale correspondante désirée de la forme en fonctionnement.

7. Coussin d'air selon l'une quelconque des revendications précédentes, **caractérisé en ce que** pour compenser un tracé de la forme en canal d'une chambre de formage (19) sous un angle différent de zéro par rapport à la direction de déroulement principale, la hauteur (35) du flan est prolongée dans la zone de cette chambre de formage (19) par une addition dans le flan par rapport à la hauteur (27) du coussin d'air.

8. Coussin d'air selon l'une quelconque des revendications précédentes, **caractérisé en ce que** dans le flan les chambres de formage (19) sont chacune décalées par rapport à leur position désirée dans l'état gonflé du coussin d'air d'un tel écart de décalage qui correspond, quant à la longueur et à la direction, au raccourcissement du coussin d'air dû au gonflage du coussin d'air perpendiculairement au tracé en forme de canal des chambres de formage (19).

9. Procédé pour réaliser un flan d'un coussin d'air latéral selon l'une quelconque des revendications précédentes, **caractérisé en ce que** l'on réalise le flan, le long du côté de fixation (11), avec un entourage sensiblement rectiligne qui possède sensiblement la même longueur que la longueur totale du tronçon de fixation (23) en forme incurvée, et **en ce que** l'on réalise le flan, le long du côté libre (15), avec un entourage sensiblement en forme incurvée qui, en partant de l'entourage rectiligne du côté de fixation (11), correspond au tracé du tronçon de fixation (23) et au tracé de l'entourage du côté libre (15) de la forme désirée en fonctionnement du coussin d'air.

10. Procédé selon la revendication 9, **caractérisé en ce que** lors de la réalisation du flan le long du côté libre (15) avec l'entourage sensiblement en forme incurvée, on choisit la hauteur (35) du flan pour plusieurs tronçons le long du côté de fixation (11) avec une taille au moins égale à la hauteur correspondante désirée (27) du coussin d'air.
